# EUROPÄISCHE PATENTANMELDUNG

(11) **EP 2 878 856 A1**
(43) Veröffentlichungstag der Anmeldung: **03.06.2015**
(21) Anmeldenummer: 13195138.6
(22) Anmeldetag: 29.11.2013
(51) Int. Cl.: F16H 3/08, F16H 3/00, F16H 3/091, F16H 3/097

(54) **Getriebe und Verfahren zu dessen Betreiben**

(71) Anmelder: Ricardo Deutschland GmbH, 73529 Schwäbisch Gmünd (DE)
(72) Erfinder: Priwitzer, Günther Matthias, 74321 Bietigheim-Bissingen (DE)
(74) Vertreter: Schmid, Wolfgang

(57) **Zusammenfassung**

Ein Getriebe (1) weist wenigstens zwei Teilgetriebe (2,3), die jeweilige Teilgetriebewellen (4,5) aufweisen und unabhängig voneinander schaltbar sind, eine Reibkupplung (6), eine mit der Reibkupplung (6) verbundene Motorausgangswelle (7), eine von der Reibkupplung (6) ausgehende erste Getriebeeingangswelle (9) und eine die Reibkupplung (6) umgehende, mit der Motorausgangswelle (7) direkt verbundene zweite Getriebeeingangswelle (10) auf. Die Teilgetriebewelle (4) des ersten Keilgetriebes (2) ist mit der ersten Getriebeeingangswelle (9) und/oder der zweiten Getriebeeingangswelle (10) in Wirkverbindung bringbar. Die Teilgetriebewelle (5) des zweiten Teilgetriebes (3) ist mit der zweiten Getriebeeingangswelle (10) und/oder der ersten Getriebeeingangswelle (9) in Wirkverbindung bringbar.

## Beschreibung

Die Erfindung betrifft ein Getriebe mit wenigstens zwei Teilgetrieben, die jeweilige Teilgetriebewellen aufweisen und unabhängig voneinander schaltbar sind, sowie ein Verfahren zum Betreiben eines solchen Getriebes.

Aus dem allgemeinen Stand der Technik sind die unterschiedlichsten Arten von Getrieben bekannt. Diese reichen von manuell zu schaltenden Getrieben über automatisiert schaltende Schaltgetriebe bis hin zu Doppelkupplungsgetrieben oder Wandler-Automatikgetrieben.

Ein Beispiel für ein Doppelkupplungsgetriebe ist in der DE 198 53 824 A1 beschrieben. Diese Doppelkupplungsgetriebe wurden ursprünglich entwickelt, um eine kostengünstige Alternative zu den bis dahin die Mehrzahl an automatischen Getrieben stellenden Wandler-Automaten zu bieten.

Doppelkupplungsgetriebe weisen jedoch verschiedene Nachteile auf, wobei in erster Linie der hohe konstruktive Aufwand zu nennen ist. Dadurch, dass während des normalen Fahrbetriebs bei eingelegten Gängen in beiden Teilgetrieben stets eine Kupplung offen und die andere Kupplung geschlossen gehalten werden muss, werden Hydraulikpumpen mit einem sehr hohen Volumenstrom zur Betätigung und Schmierung benötigt, was zusätzlich zum konstruktiven Aufwand auch die Effizienz der mit einem solchen Doppelkupplungsgetriebe ausgestatteten Fahrzeuge verringert, da der ständige Volumenstrom einen zusätzlichen Kraftstoffverbrauch hervorruft.

Ein weiterer Nachteil der bekannten Doppelkupplungsgetriebe besteht in der aufwändigen Konstruktion der Kupplungen, da diese in der Lage sein müssen, innerhalb von Bruchteilen einer Sekunde vom geöffneten in den geschlossenen Zustand überzugehen und umgekehrt. Da unter allen Umständen vermieden werden muss, dass sich beide Kupplungen bei eingelegten Gängen in ihrem geschlossenen Zustand befinden, müssen auch die zum Umschalten der Kupplungen vorgesehenen Betätigungselemente entsprechend zuverlässig ausgeführt sein. Tatsächlich hat sich die Serienfertigung dieser Kupplungen, insbesondere wenn sie als Trockenkupplungen ausgeführt sein sollen, als sehr große Herausforderung erwiesen, weshalb nur sehr wenige Unternehmen tatsächlich in der Lage sind, diese Kupplungen in Serie herzustellen.

Diese Umstände haben dazu geführt, dass die Preise von Doppelkupplungsgetrieben entgegen der ursprünglichen Zielsetzung nicht erheblich unter denjenigen von Wandler-Automatikgetrieben liegen.

Trotz dieses hohen Aufwands erreichen Doppelkupplungsgetriebe in verschiedenen Bereichen noch immer nicht die Schaltperformance von Wandlergetrieben. Beispielsweise kann durch die Aufteilung des Getriebes in zwei Teilgetriebe von der vierten Schaltstufe nur in die dritte oder fünfte Schaltstufe, jedoch nicht in die zweite Schaltstufe geschaltet werden, was beispielsweise beim Heranfahren an Kreuzungen zu Problemen führen kann, wenn es an sich notwendig wäre, zwei Schaltstufen herunterzuschalten, um die gewünschte Beschleunigung zu erzielen.

Es ist daher Aufgabe der vorliegenden Erfindung, ein Getriebe zu schaffen, das eine gute Schaltleistung aufweist und mit verhältnismäßig geringem Aufwand und zu verhältnismäßig günstigen Kosten herstellbar ist.

Erfindungsgemäß wird diese Aufgabe durch die in Anspruch 1 genannten Merkmale gelöst.

Bei dem erfindungsgemäßen Getriebe umgeht also eine der wenigstens zwei Getriebeeingangswellen die Reibkupplung und ist direkt mit der Motorausgangswelle verbunden. Dadurch ist lediglich eine Reibkupplung erforderlich und es kann im Vergleich zu den bekannten Doppelkupplungsgetrieben auf eine Reibkupplung verzichtet werden. Dies stellt eine wesentliche Vereinfachung des erfmdungsgemäßen Getriebes dar, so dass dieses wesentlich kostengünstiger als bekannte Doppelkupplungsgetriebe oder Wandler-Automatikgetriebe hergestellt werden kann. Dennoch lässt sich mit dem erfindungsgemäßen Getriebe ein hoher Schaltkomforf erzielen, da bei entsprechender Auslegung bei den Schaltvorgängen so gut wie keine Zugkraftunterbrechung auftritt.

Im Gegensatz zu bekannten Doppelkupplungsgetrieben kann des Weiteren auf eine komplizierte Aktorik verzichtet werden, da es nicht erforderlich ist, die Reibkupplung ständig offen zu halten. Ein weiterer Vorteil der erfindungsgemäßen Lösung besteht außerdem darin, dass durch den Verzicht auf entsprechende Hydraulikpumpen auch der Kraftstoffverbrauch gesenkt werden kann.

In einer vorteilhaften Weiterbildung der Erfindung kann vorgesehen sein, dass die einzelnen Gangstufen zumindest des zweiten Teilgetriebes mittels jeweiliger Schaltelemente betätigbar sind. Durch den Einsatz solcher verhältnismäßig einfach ausführbarer Schaltelemente kann der konstruktive Aufwand des Getriebes in Grenzen gehalten werden, so dass die Kosten desselben weiter gesenkt werden können.

Wenn dabei die direkt mit der Motorausgangswelle in Verbindung stehenden Schaltelemente als formschlüssige, kraftbetätigte Schaltelemente ausgebildet sind, die bei Wegfall der Betätigungskraft deaktiviert werden, so ist sichergestellt, dass die Schaltelemente deaktiviert werden, sobald die Betätigungskraft weggenommen wird, so dass die entsprechende Gangstufe selbsttätig herausgenommen bzw. gelöst wird. Dadurch wird zuverlässig verhindert, dass in den beiden Teilgetrieben zwei unterschiedliche Gangstufen eingelegt sind und mit der Motorausgangswelle bzw. der Getriebeausgangswelle verbunden werden, was ansonsten zu erheblichen Beschädigungen des Getriebes führen würde.

Des Weiteren kann vorgesehen sein, dass die zweite Getriebeeingangswelle über jeweilige Übertragungsmittel und damit in Wirkverbindung stehende Schaltelemente mit den wenigstens zwei Teilgetriebewellen in Wirkverbindung bringbar ist. Mittels der Übertragungsmittel und der mit denselben in Wirkverbindung stehenden Schaltelementen kann auf sehr einfache Weise die mit der Motorausgangswelle direkt verbundene, zweite Getriebeeingangswelle mit dem gewünschten Teilgetriebe verbunden werden, wobei wiederum die Schaltelemente relativ einfach und damit kostengünstig ausgeführt sein können.

Auch bei dieser Ausführungsform des Getriebes kann vorgesehen sein, dass die mit den Übertragungsmitteln in Wirkverbindung stehenden Schaltelemente als formschlüssige, kraftbetätigte Schaltelemente ausgebildet sind, die bei Wegfall der Betätigungskraft deaktiviert werden. Wie oben erläutert gewährleistet dies, dass die Schaltelemente deaktiviert werden, sobald die Betätigungskraft weggenommen wird und dadurch die eingelegte Gangstufe selbsttätig herausgenommen wird.

Eine gleichermaßen konstruktiv einfache und zuverlässige Ausführungsform der formschlüssigen Schaltelemente ergibt sich, wenn diese als Klauenkupplungen ausgebildet sind.

Des Weiteren kann gemäß der vorliegenden Erfindung vorgesehen sein, dass die Übertragungsmittel als Zahnradpaare ausgebildet sind. Bei Zahnrädern handelt es sich um im Getriebebau eingeführte und äußerst zuverlässig arbeitende Bauteile.

Eine konstruktiv einfache Möglichkeit zur gegenseitigen Anordnung der ersten und der zweiten Getriebeeingangswelle ergibt sich, wenn diese koaxial ineinander angeordnet sind.

Eine weitere vorteilhafte Ausgestaltung der Erfindung kann darin bestehen, dass drei oder mehr Teilgetriebe mit jeweiligen Teilgetriebewellen vorgesehen sind, wobei die zweite Getriebeeingangswelle über jeweilige Übertragungsmittel und damit in Wirkverbindung stehende Schaltelemente mit den drei oder mehr Teilgetriebewellen in Wirkverbindung bringbar ist. Bei einer derartigen Ausführungsform des Getriebes kann zum Einen eine größere Anzahl an Gangstufen realisiert werden, zum Anderen ist durch die größere Anzahl an Teilgetrieben eine größere Auswahl an Gangstufen, in welche das Getriebe bei einem Gangwechsel geschaltet werden kann, möglich. Dies führt zu größeren Variationsmöglichkeiten bei einem bevorstehenden bzw. geplanten Gangwechsel, da im Gegensatz zu bekannten Doppelkupplungsgetrieben auch Gänge übersprungen werden können.

In einer weiteren vorteilhaften Ausgestaltung der Erfindung kann vorgesehen sein, dass die beiden Getriebeeingangswellen jeweils mit wenigstens zwei zusätzlichen Übertragungsmitteln, die unterschiedliche Übersetzungen aufweisen, verbunden sind. Durch diese unterschiedliche Übersetzungen aufweisenden, wenigstens zwei zusätzlichen Übertragungsmittel kann die Anzahl an zu schaltenden Gangstufen verdoppelt werden, was insbesondere beim Einsatz des erfindungsgemäßen Getriebes in Nutzfahrzeuge erhebliche Vorteile mit sich bringen kann.

Eine verfahrensgemäße Lösung der Aufgabe ist in Anspruch 11 angegeben.

Gemäß dem erfindungsgemäßen Verfahren erfolgt also in der Phase, in der in dem mit der Reibkupplung verbundenen Teilgetriebe ein anderer Gang eingelegt wird, der Antrieb über die starre bzw. direkte Verbindung der zweiten Getriebeeingangswelle mit der Motorausgangswelle. Beim Schließen der Reibkupplung, die bei den Schaltvorgängen im Wesentlichen zum Ausgleich der Drehzahldifferenz zwischen zwei zu schaltenden Gangstufen eingesetzt wird, wird die in dem direkt mit der Motorausgangswelle verbundenen Teilgetriebe eingelegte Gangstufe herausgenommen. Bei jedem Schaltvorgang erfolgt dabei ein Wechsel von der direkten Verbindung zu der Verbindung über die Reibkupplung. Je nach Ausführung der wenigstens zwei Teilgetriebe kann es dabei sogar möglich sein, von einer Gangstufe in eine beliebige andere Gangstufe zu wechseln.

In einer vorteilhaften Weiterbildung des erfindungsgemäßen Verfahrens kann vorgesehen sein, dass unmittelbar nach einem Schaltvorgang und dem Einlegen einer Gangstufe in dem direkt mit der Motorausgangswelle verbundenen Teilgetriebe die Reibkupplung geöffnet und die Getriebeausgangswelle ausschließlich über die direkt mit der Motorausgangswelle verbundene Getriebeeingangswelle angetrieben wird. Dadurch kann möglicherweise eine schnellere Schaltzeit erreicht und die Reibkupplung geschont werden.

Alternativ dazu kann vorgesehen sein, dass in dem direkt mit der Motorausgangswelle verbundenen Teilgetriebe nur unmittelbar vor einem Schaltvorgang eine Gangstufe eingelegt wird, und dass unmittelbar nach einem Schaltvorgang in dem direkt mit der Motorausgangswelle verbundenen Teilgetriebe die Gangstufe herausgenommen wird. Bei dieser Vorgehensweise ist es nicht erforderlich, das der jeweiligen Gangstufe zugeordnete Schaltelement zu betätigen, um sicherzustellen, dass sich die jeweilige Gangstufe nicht selbsttätig löst.

Nachfolgend sind Ausführungsbeispiele der Erfindung anhand der Zeichnung prinzipmäßig dargestellt.

Es zeigt:
Fig. 1 eine erste Ausführungsform des erfindungsgemäßen Getriebes in einem ersten Schaltzustand;
Fig. 2 das Getriebe aus Fig. 1 in einem zweiten Schaltzustand;
Fig. 3 das Getriebe aus Fig. 1 in einem dritten Schaltzustand;
Fig. 4 das Getriebe aus Fig. 1 in einem vierten Schaltzustand;
Fig. 5 das Getriebe aus Fig. 1 in einem fünften Schaltzustand;
Fig. 6 das Getriebe aus Fig. 1 in einem sechsten Schaltzustand;
Fig. 7 das Getriebe aus Fig. 1 in einem siebten Schaltzustand;
Fig. 8 das Getriebe aus Fig. 1 in einem achten Schaltzustand;
Fig. 9 das Getriebe aus Fig. 1 in einem neunten Schaltzustand;
Fig. 10 das Getriebe aus Fig. 1 in einem zehnten Schaltzustand;
Fig. 11 das Getriebe aus Fig. 1 in einem elften Schaltzustand;
Fig. 12 das Getriebe aus Fig. 1 in einem zwölften Schaltzustand;
Fig. 13 das Getriebe aus Fig. 1 in einem dreizehnten Schaltzustand;
Fig. 14 eine zweite Ausführungsform des erfindungsgemäßen Getriebes in einem ersten Schaltzustand;
Fig. 15 das Getriebe aus Fig. 14 in einem zweiten Schaltzustand;
Fig. 16 das Getriebe aus Fig. 14 in einem dritten Schaltzustand;
Fig. 17 das Getriebe aus Fig. 14 in einem vierten Schaltzustand;
Fig. 18 das Getriebe aus Fig. 14 in einem fünften Schaltzustand;
Fig. 19 das Getriebe aus Fig. 14 in einem sechsten Schaltzustand;
Fig. 20 das Getriebe aus Fig. 14 in einem siebten Schaltzustand;
Fig. 21 das Getriebe aus Fig. 14 in einem achten Schaltzustand;
Fig. 22 das Getriebe aus Fig. 14 in einem neunten Schaltzustand;
Fig. 23 das Getriebe aus Fig. 14 in einem zehnten Schaltzustand;
Fig. 24 das Getriebe aus Fig. 14 in einem elften Schaltzustand;
Fig. 25 ein Detail eines formschlüssigen Schaltelements;
Fig. 26 ein Diagramm, in dem ein erster beispielhafter Drehmomentverlauf beim Hochschalten über der Zeit dargestellt ist;
Fig. 27 ein Diagramm, in dem ein zweiter beispielhafter Drehmomentverlauf beim Hochschalten über der Zeit dargestellt ist;
Fig. 28 ein Diagramm, in dem ein dritter beispielhafter Drehmomentverlauf beim Hochschalten über der Zeit dargestellt ist;
Fig. 29 ein Diagramm, in dem ein vierter beispielhafter Drehmomentverlauf beim Hochschalten über der Zeit dargestellt ist;
Fig. 30 ein Diagramm, in dem ein erster beispielhafter Drehmomentverlauf beim Herunterschalten über der Zeit dargestellt ist;
Fig. 31 eine dritte Ausführungsform des erfindungsgemäßen Getriebes; und
Fig. 32 eine vierte Ausführungsform des erfindungsgemäßen Getriebes.

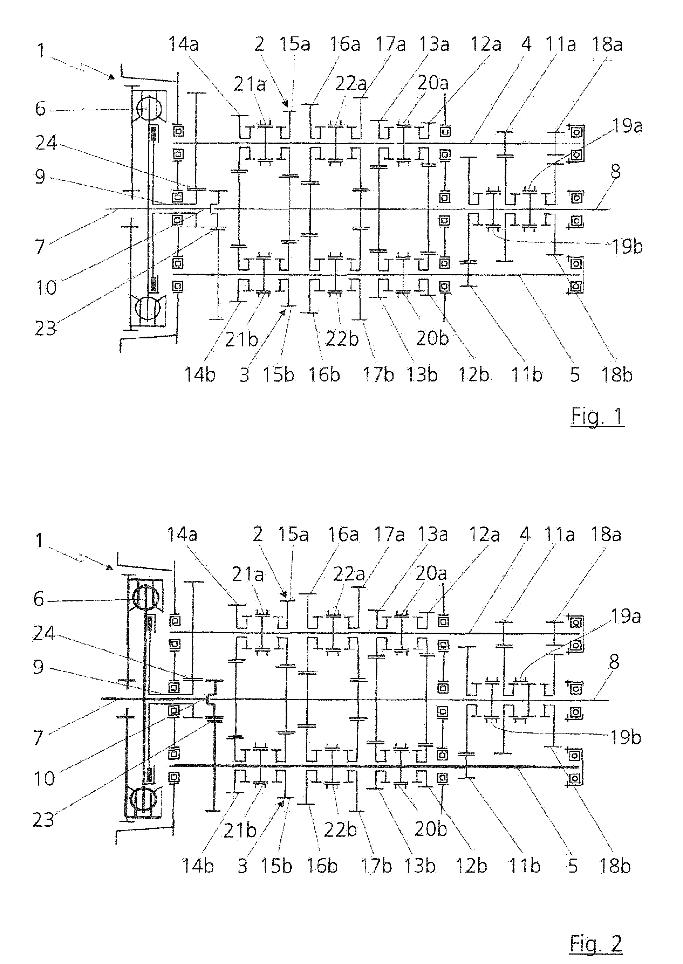

Fig. 1 zeigt eine erste Ausführungsform eines Getriebes 1, das im vorliegenden Fall zwei Teilgetriebe 2 und 3 aufweist, die nachfolgend als erstes Teilgetriebe 2 und zweites Teilgetriebe 3 bezeichnet werden.

In den Figuren 1 bis 13, die verschiedene Schaltzustände des Getriebes 1 zeigen, ist das erste Teilgetriebe 2 jeweils oben und das zweite Teilgetriebe 3 jeweils unten dargestellt, was jedoch als rein beispielhaft anzusehen ist. Beide Teilgetriebe 2 und 3 weisen jeweilige Teilgetriebewellen 4 und 5 auf, wobei die mit dem Bezugszeichen 4 bezeichnete Teilgetriebewelle 4 dem ersten Teilgetriebe 2 zugeordnet ist und daher nachfolgend auch als erste Teilgetriebewelle 4 bezeichnet wird, wohingegen die mit dem Bezugszeichen 5 bezeichnete Teilgetriebewelle dem zweiten Teilgetriebe 3 zugeordnet ist und daher nachfolgend auch als zweite Teilgetriebewelle 5 bezeichnet wird. Wie im Folgenden näher erläutert wird, sind die beiden Teilgetriebe 2 und 3 unabhängig voneinander schaltbar, d. h. die jeweiligen Gangstufen der beiden Teilgetriebe 2 und 3 können unabhängig voneinander eingelegt werden. Grundsätzlich ist es also möglich, dass in den beiden Teilgetrieben 2 und 3 jeweils eine Gangstufe bzw. ein "Gang" eingelegt ist.

Das Getriebe 1 weist des Weiteren eine Reibkupplung 6 auf, die wie alle anderen Bauteile des Getriebes 1 in den Figuren nur sehr schematisch dargestellt ist und die dazu dient, die beim Wechsel zwischen zwei Gangstufen auftretenden Drehzahldifferenzen zwischen einer mit der Reibkupplung verbundenen Motorausgangswelle 7 und einer aus dem Getriebe 1 herausführenden, in nicht dargestellter Weise mit einem Antrieb eines Kraftfahrzeugs, in dem das Getriebe 1 eingebaut ist, verbundenen Getriebeausgangswelle 8, zu überbrücken. Bei der Reibkupplung 6 kann es sich um eine Lamellenkupplung, eine Trockenkupplung oder eine andere, in an sich bekannter Weise ausgebildete Kupplung handeln.

Des Weiteren weist das Getriebe 1 eine erste, von der Reibkupplung 6 ausgehende Getriebeeingangswelle 9 und eine die Reibkupplung 6 umgehende, mit der Motorausgangswelle 7 direkt verbundene zweite Getriebeeingangswelle 10 auf. Wie sich aus der schematischen Darstellung von Fig. 1 ergibt, ist die zweite Getriebeeingangswelle 10 koaxial in der als Hohlwelle ausgeführten ersten Getriebeeingangswelle 9 angeordnet. Zur Durchführung der zweiten Getriebeeingangswelle 10 kann die Reibkupplung 6 mit einer nicht dargestellten Ausnehmung versehen sein.

Die zur Lagerung der ersten Teilgetriebewelle 4, der zweiten Teilgetriebewelle 5, der Motorausgangswelle 7, der Getriebeausgangswelle 8, der ersten Getriebeeingangswelle 9 und der zweiten Getriebeeingangswelle 10 eingesetzten Lager sind in den Figuren zwar schematisch dargestellt, diese werden jedoch nicht näher beschrieben und sind auch nicht mit Bezugszeichen versehen, da sie für die Erfindung keine wesentliche Rolle spielen.

Eine sämtliche hierin beschriebenen Ausführungsformen des Getriebes 1 verbindende Idee besteht darin, dass die Teilgetriebewelle 4 des ersten Teilgetriebes 2 mit der ersten Getriebeeingangswelle 9 und/oder der zweiten Getriebeeingangswelle 10 in Wirkverbindung bringbar ist, und dass die Teilgetriebewelle 5 des zweiten Teilgetriebes 3 mit der zweiten Getriebeeingangswelle 10 und/oder der ersten Getriebeeingangswelle 9 in Wirkverbindung bringbar ist.

Bei der in den Figuren 1 bis 13 dargestellten Ausführungsform des Getriebes 1 kann die Motorausgangswelle 7 durch Schließen der Reibkupplung 6 über die Reibkupplung 6 und die erste Getriebeeingangswelle 9 mit der ersten Teilgetriebewelle 4 des ersten Teilgetriebes 2 verbunden werden. In dem Fall, in dem die Reibkupplung 6 geöffnet ist, ist diese Verbindung unterbrochen. Die zweite Teilgetriebewelle 5 des zweiten Teilgetriebes 3 ist dagegen ständig über die zweite Getriebeeingangswelle 10 direkt mit der Motorausgangswelle 7 verbunden.

Das erste Teilgetriebe 2 weist in dem in den Figuren 1 bis 13 dargestellten Ausführungsbeispiel sieben Gangstufen für jeweilige Vorwärtsgänge und eine Gangstufe für einen Rückwärtsgang auf. Dabei ist die erste Gangstufe mit dem Bezugszeichen 11a, die zweite Gangstufe mit dem Bezugszeichen 12a, die dritte Gangstufe mit dem Bezugszeichen 13a, die vierte Gangstufe mit dem Bezugszeichen 14a, die fünfte Gangstufe mit dem Bezugszeichen 15a, die sechste Gangstufe mit dem Bezugszeichen 16a, die siebte Gangstufe mit dem Bezugszeichen 17a und die Gangstufe für den Rückwärtsgang mit dem Bezugszeichen 18a bezeichnet. Das zweite Teilgetriebe 3 weist die identischen Gangstufen für die sieben Vorwärtsgänge und den Rückwärtsgang auf, die mit dem Bezugszeichen 11b bis 18b bezeichnet sind. Bei den Gangstufen 11a bis 18a und 11b bis 18b handelt es sich im vorliegenden Fall in an sich bekannter Weise jeweils um Zahnradpaare.

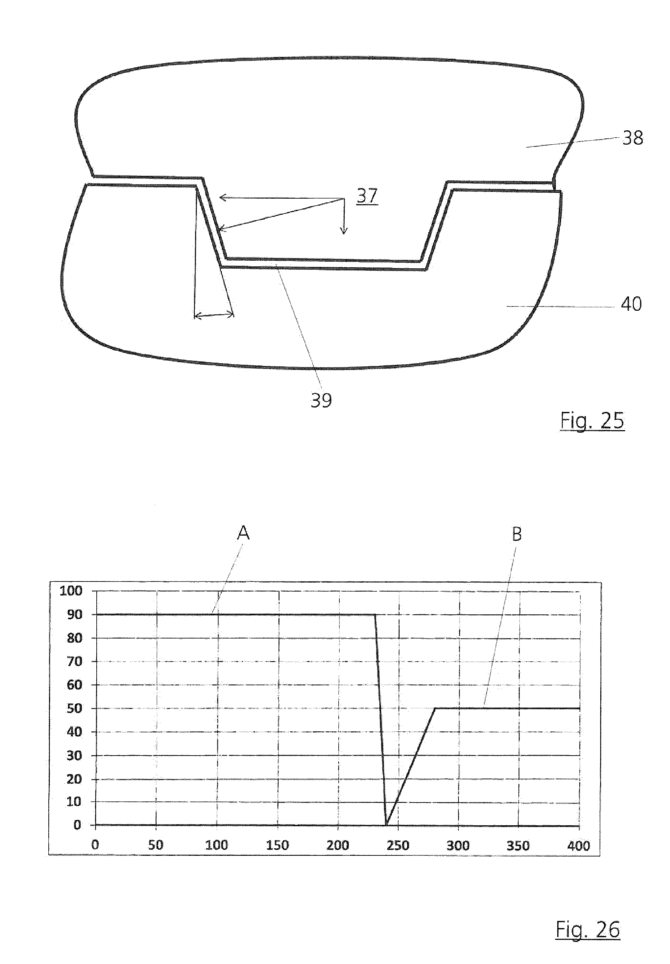

Sämtliche Gangstufen 11a bis 18a des ersten Teilgetriebes 2 und sämtliche Gangstufen 11b bis 18b des zweiten Teilgetriebes 3 sind mittels jeweiliger Schaltelemente betätigbar. Hierbei ist der ersten Gangstufe 11a ein Schaltelement 19a, der zweiten und dritten Gangstufe 12a bzw. 13a ein gemeinsames Schaltelement 20a, der vierten und fünften Gangstufe 14a und 15a ein gemeinsames Schaltelement 21a und der sechsten und siebten Gangstufe 16a und 17a ein gemeinsames Schaltelement 22a zugeordnet. In ähnlicher Weise erfolgt bei dem zweiten Teilgetriebe 3 die Zuordnung eines Schaltelements 19b zu der ersten Gangstufe 11b, eines gemeinsamen Schaltelements 20b zu den beiden Gangstufen 12b und 13b, eines gemeinsamen Schaltelements 21b zu den beiden Gangstufen 14b und 15b und eines gemeinsamen Schaltelements 22b zu den beiden Gangstufen 16b und 17b. Die Schaltelemente 19a, 19b, 20a, 20b, 21 a, 21 b, 22a und 22b sind jeweils als formschlüssige, kraftbetätigte Schaltelemente ausgebildet, die bei Wegfall der dieselben betätigenden Betätigungskraft deaktiviert werden. Beispielsweise kann es sich bei den formschlüssigen Schaltelementen 19a, 19b, 20a, 20b, 21 a, 21b, 22a und 22b um Klauenkupplungen handeln, was anhand von Fig. 25 zu einem späteren Zeitpunkt detaillierter beschrieben wird.

Anhand der Figuren 1 bis 13 werden nun beispielhaft Schaltvorgänge bei dem die beiden Teilgetriebe 2 und 3 aufweisenden Getriebe 1, bei dem jedes Teilgetriebe 2 und 3 sämtliche Gangstufen 11a bis 18a und 11b bis 18b aufweist, beschrieben.

Dabei zeigt Fig. 1 den Ruhezustand des Getriebes, in dem in keinem der beiden Teilgetriebe 2 und 3 eine Gangstufe eingelegt ist.

Dagegen ist in der Darstellung von Fig. 2 das der ersten Gangstufe 11a des ersten Teilgetriebes 2 zugeordnete Schaltelement 19a in seine die erste Gangstufe 11a betätigende Position gerückt, so dass in dem ersten Teilgetriebe 2 die erste Gangstufe 11a eingelegt ist. In dem zweiten Teilgetriebe 3 ist dagegen kein Gang eingelegt. Da die Reibkupplung 6 geöffnet ist, ist die Motorausgangswelle 7 nicht mit der Getriebeausgangswelle 8 verbunden und es erfolgt kein Antrieb der Getriebeausgangswelle 8. Die veränderte Position des Schaltelements 19a ist dadurch angedeutet, dass das Schaltelement 19a mit einer fetten Linie dargestellt ist. Da die zweite Teilgetriebewelle 5 stets mit der Motorausgangswelle 7 verbunden ist, sind die Motorausgangswelle 7, ein zwischen der Motorausgangswelle 7 und der zweiten Teilgetriebewelle 5 vorgesehenes Zahnradpaar 23 und die zweite Teilgetriebewelle 5 in sämtlichen Figuren 1 bis 13 ebenfalls fett dargestellt. Auf diese Weise soll angedeutet werden, welche Bauteile des Getriebes jeweils angetrieben sind bzw. werden. Die Tatsache, dass sich zwischen der zweiten Teilgetriebewelle 5 und der Motorausgangswelle 7 das Zahnradpaar 23 befindet, ändert nichts daran, dass die zweite Teilgetriebewelle 5, wie oben beschrieben, direkt mit der Motorausgangswelle 7 verbunden ist, da durch den Begriff "direkt" ausgesagt werden soll, dass die Verbindung nicht über die Reibkupplung 6 erfolgt.

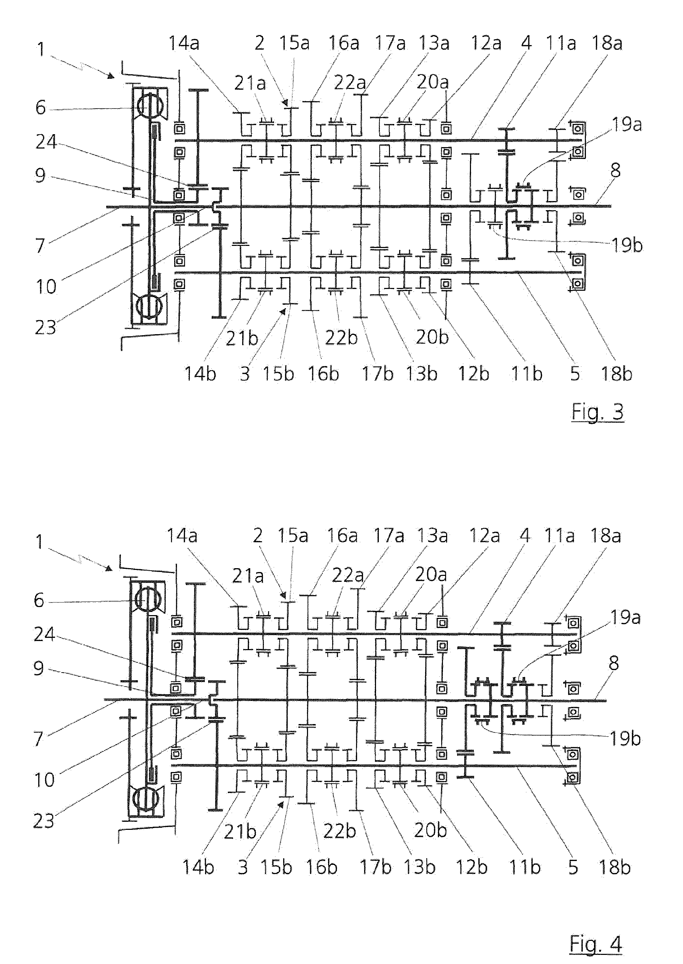

In dem Zustand des Getriebes 1 von Fig. 3 ist die Reibkupplung 6 geschlossen bzw. in Eingriff, so dass der Antrieb über die Motorausgangswelle 7, die Reibkupplung 6, die erste Getriebeeingangswelle 9, ein die erste Getriebeeingangswelle 9 mit der Teilgetriebewelle 4 des ersten Teilgetriebes 2 verbindendes Zahnradpaar 24, die erste Teilgetriebewelle 4, die erste Gangstufe 11a und die Getriebeausgangswelle 8 erfolgt. Die genannten Bauteile sind daher in Fig. 3 zusätzlich zu den in Fig. 2 fett markierten Bauteilen ebenfalls fett markiert. Wie oben erläutert, übernimmt dabei die Reibkupplung 6 in an sich bekannter Weise die Aufgabe, die Drehzahl der Getriebeausgangswelle 8 an die Drehzahl der Motorausgangswelle 7 anzupassen.

Im Schaltzustand von Fig. 4 wurde zusätzlich zu der in dem ersten Teilgetriebe 2 eingelegten ersten Gangstufe 11 a auch im zweiten Teilgetriebe 3 durch Betätigen des Schaltelements 19b die erste Gangstufe 11b eingelegt. Da die zweite Teilgetriebewelle 5 über das Zahnradpaar 24 direkt mit der Motorausgangswelle 7 verbunden ist, erfolgt der Antrieb der Getriebeausgangswelle 8 in diesem Fall sowohl über das erste Teilgetriebe 2 als auch über das zweite Teilgetriebe 3. Wiederum ist dies durch fette Linien dargestellt. Da die beiden ersten Gangstufen 19a und 19b in den beiden Teilgetrieben 2 und 3 exakt dieselbe Übersetzung aufweisen, ist dieser doppelte Antrieb der Getriebeausgangswelle 8 über die beiden Teilgetriebe 2 und 3 problemlos möglich.

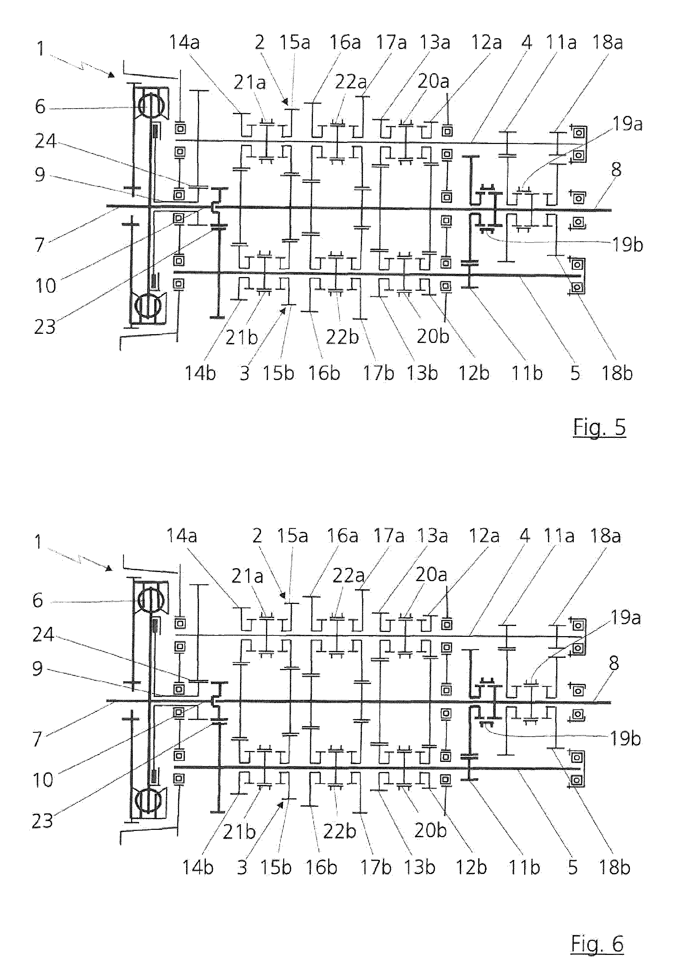

In dem Schaltzustand von Fig. 5 wurde die Reibkupplung 6 gelöst bzw. geöffnet, so dass die erste Teilgetriebewelle 4 nicht mehr mit der Motorausgangswelle 7 verbunden ist. Der Antrieb der Getriebeausgangswelle 8 durch die Motorausgangswelle 7 erfolgt in diesem Fall also ausschließlich über die zweite Teilgetriebewelle 5. Hierbei handelt es sich also um einen Direktantrieb der Getriebeausgangswelle 8 ohne den Einsatz der Reibkupplung 6. Wiederum ist dies durch entsprechende fette Linien dargestellt.

Gemäß Fig. 6 wurde nach dem Öffnen der Reibkupplung 6 in dem ersten Teilgetriebe 2 durch entsprechendes Betätigen des zugehörigen Schaltelements 19a auch die erste Gangstufe 11a gelöst, sodass in dem ersten Teilgetriebe 2 kein Gang eingelegt ist.

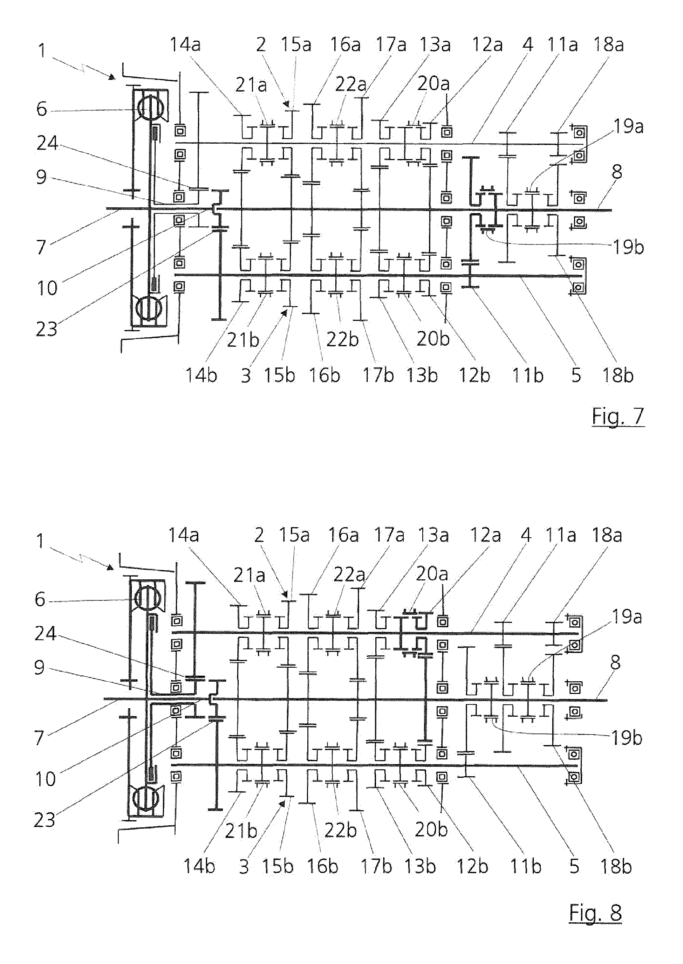

In dem Schaltzustand von Fig. 7 erfolgt der Antrieb der Getriebeausgangswelle 8 weiterhin über die zweite Teilgetriebewelle 5 und die erste Gangstufe 11b des zweiten Teilgetriebes 3. Im Unterschied zu Fig. 6 wurde jedoch durch eine Betätigung mittels des Schaltelements 20a in dem ersten Teilgetriebe 2 die zweite Gangstufe 12a eingelegt. Da die Reibkupplung 6 nicht geschlossen ist, ist dies für den Antrieb der Getriebeausgangswelle 8 jedoch nicht relevant. Vielmehr wird auf diese Art und Weise ein Umschalten des Getriebes 1 von der ersten Gangstufe 11b des zweiten Teilgetriebes 3 auf die zweite Gangstufe 12a des ersten Teilgetriebes 1 vorbereitet. Da der Antrieb, wie erwähnt, auch weiterhin über das zweite Teilgetriebe 3 erfolgt, sind die entsprechenden für den Antrieb eingesetzten Bauteile wiederum fett markiert.

Im Schaltzustand des Getriebes 1 von Fig. 8 wird gleichzeitig mit dem Schließen der Reibkupplung 6 das Schaltelement 19b deaktiviert, so dass die erste Gangstufe 11b in dem zweiten Teilgetriebe 3 herausgenommen wird und sich das zweite Teilgetriebe 3 im Leerlauf befindet. Durch das Schließen der Reibkupplung 6 und das gleichzeitige Herausnehmen bzw. Lösen der ersten Gangstufe 11b in dem zweiten Teilgetriebe 3 erfolgt der Antrieb der Getriebeausgangswelle 8 über das erste Teilgetriebe 2. Im vorliegenden Fall erfolgt der Antrieb der Getriebeausgangswelle 8 also über die Motorausgangswelle 7, die Reibkupplung 6, die erste Getriebeeingangswelle 9, das Zahnradpaar 24, die erste Teilgetriebewelle 4 und die zweite Gangstufe 12a auf die Getriebeausgangswelle 8. Die genannten Teile sind wiederum fett dargestellt. Wie erwähnt findet über die zweite Teilgetriebewelle 5 des zweiten Teilgetriebes 3 in diesem Zustand kein Antrieb der Getriebeausgangswelle 8 statt, da sich das zweite Teilgetriebe 3 im Leerlauf befindet.

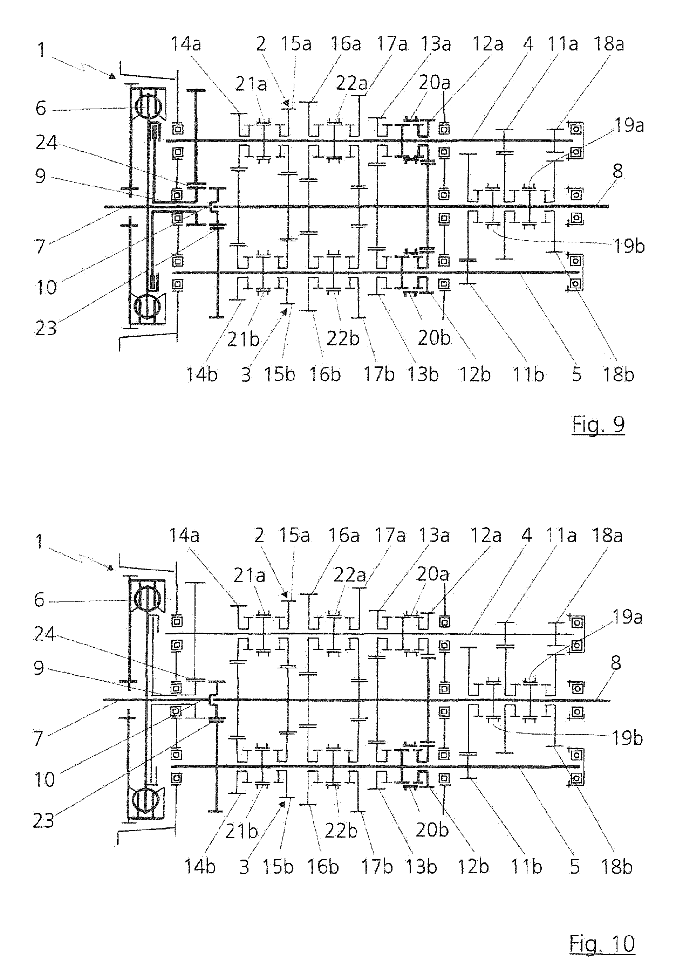

In dem Schaltzustand von Fig. 9 wurde mittels des Schaltelements 20b in dem zweiten Teilgetriebe 3 die zweite Gangstufe 12b aktiviert bzw. eingelegt. Dies geschieht im Prinzip analog zu dem Schaltzustand von Fig. 4, wo mittels des Schaltelements 19b die erste Gangstufe 11b in dem zweiten Teilgetriebe 3 eingelegt wurde. Damit ist die Getriebeausgangswelle 8 wiederum sowohl über die erste Teilgetriebewelle 4 als auch über die zweite Teilgetriebewelle 5 mit der Motorausgangswelle 7 verbunden. Wie in den vorhergehenden Figuren sind die am Antrieb beteiligten Bauteile fett markiert.

Analog zu der Vorgehensweise von Fig. 5 wird gemäß Fig. 10 die Reibkupplung 6 gelöst und der Antrieb des Kraftfahrzeugs erfolgt ausschließlich über die zweite Teilgetriebewelle 5 und die zweite Gangstufe 12b direkt und ohne den Einsatz der Reibkupplung auf die Getriebeausgangswelle 8.

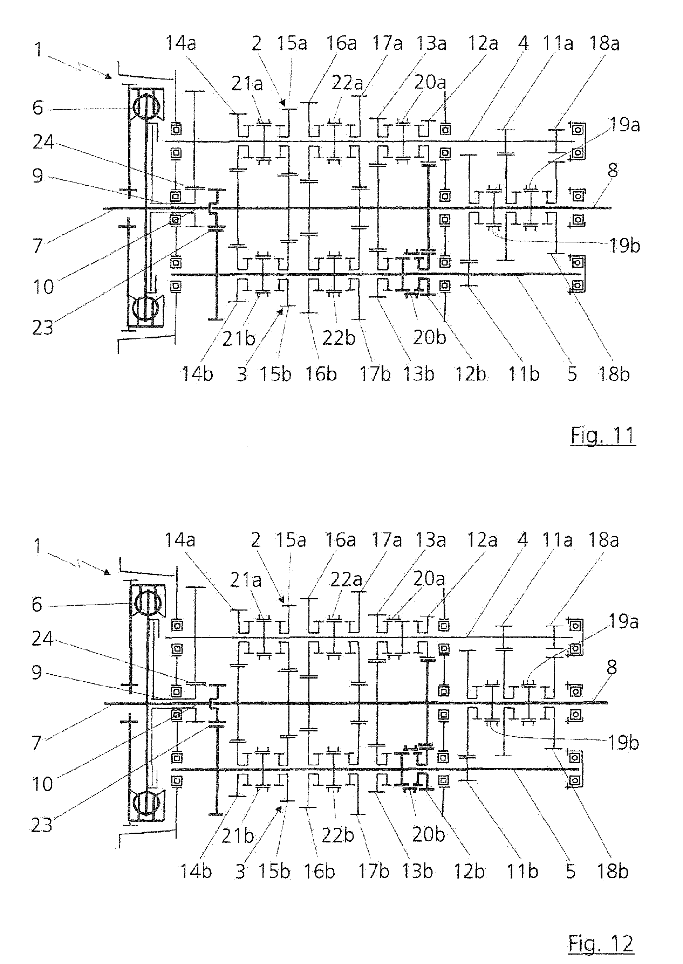

Anschließend wird, wie in Fig. 11 dargestellt, das Schaltelement 20a in seine neutrale Stellung gebracht, so dass in der ersten Teilgetriebewelle 4 kein Zahnradpaar in Eingriff ist und sich das erste Teilgetriebe 2 im Leerlauf befindet. Dies erfolgt wiederum analog zu der Vorgehensweise von Fig. 6.

In dem Schaltzustand von Fig. 12 wurde das Schaltelement 20a in eine Stellung gebracht, in der es die dritte Gangstufe 13a des ersten Teilgetriebes 2 betätigt. Somit ist in dem zweiten Teilgetriebe 3 die zweite Gangstufe 12b und in dem ersten Teilgetriebe 2 die dritte Gangstufe 13a eingelegt, um analog zu Fig. 7 das Umschalten des Getriebes 1 von der zweiten Gangstufe 12b des zweiten Teilgetriebes 3 auf die dritte Gangstufe 13a des ersten Teilgetriebes 1 vorzubereiten. Da die Reibkupplung 6 noch immer außer Eingriff ist, erfolgt der Antrieb auch weiterhin nur über die zweite Teilgetriebewelle 5 und die zweite Gangstufe 12b auf die Getriebeausgangswelle 8.

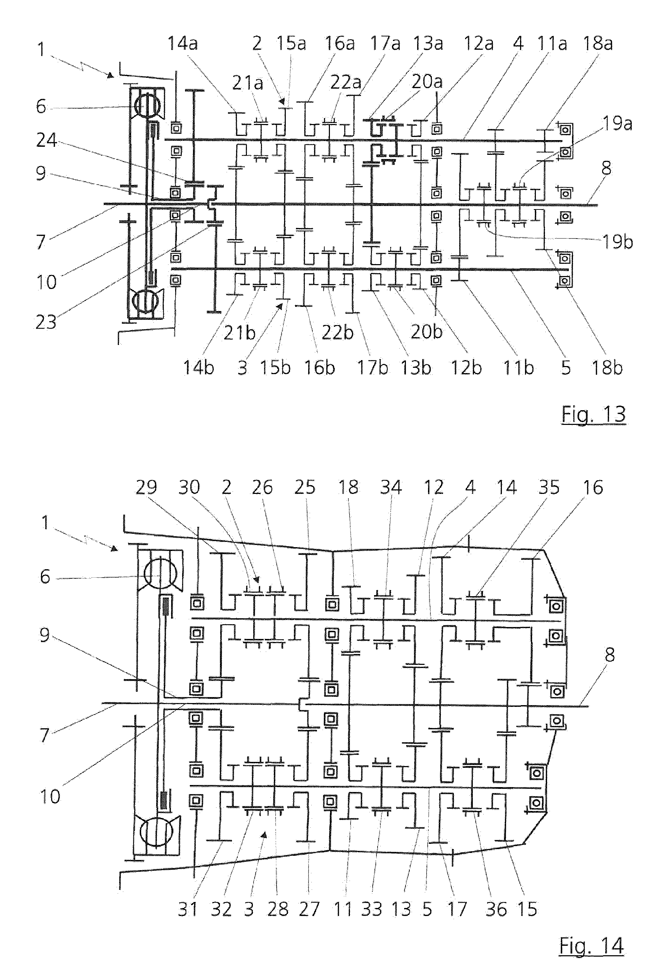

Schließlich erfolgt der in Fig. 13 dargestellte Schritt, bei dem simultan mit dem Schließen der Reibkupplung 6 das Schaltelement 20b des zweiten Teilgetriebes 3 gelöst wird, so dass die zweite Gangstufe 12b in dem zweiten Teilgetriebe 3 herausgenommen wird und, da die dritte Gangstufe 13a in dem zweiten Teilgetriebe 3 bereits eingelegt war, der Antrieb des Kraftfahrzeugs über die Reibkupplung 6, die erste Teilgetriebewelle 4 und die dritte Gangstufe 13a auf die Getriebeausgangswelle 8 erfolgt. Die weiteren Schaltvorgänge können in ähnlicher Weise durchgeführt werden, wobei das Herunterschalten in umgekehrter Reihenfolge durchgeführt wird.

Die Automatisierung sämtlicher Schaltvorgänge mittels einer in den Figuren nicht dargestellten Steuereinrichtung kann in an sich bekannter Weise erfolgen und wird daher nicht näher beschrieben.

Grundsätzlich ist es möglich, unmittelbar nach einem Schaltvorgang und dem Einlegen der entsprechenden Gangstufe in dem zweiten Teilgetriebe 3 die Reibkupplung 6 zu lösen und die Getriebeausgangswelle 8 ausschließlich über die direkt angetriebene zweite Getriebeeingangswelle 10 anzutreiben. Dann ist es allerdings erforderlich, das der jeweiligen Gangstufe 11b bis 17b zugeordnete Schaltelement 19b bis 22b zu betätigen, um sicherzustellen, dass sich die jeweilige Gangstufe 11 bis 17 nicht selbsttätig löst. Andererseits kann dadurch eine schnellere Schaltzeit erreicht und möglicherweise die Reibkupplung 6 geschont werden. Dies ist auch bei den nachfolgend beschriebenen Ausführungsformen des Getriebes 1 denkbar. In Abhängigkeit davon, welche der beschriebenen Strategien eingesetzt wird, können die Bauteile des nur für Schaltvorgänge genutzten Teilgetriebes 2 oder 3 möglicherweise geringer dimensioniert ausgeführt werden.

In den Figuren 14 bis 25 ist eine alternative Ausführungsform des Getriebes 1 dargestellt. Wiederum weist das Getriebe 1 die beiden Teilgetriebe 2 und 3 mit den jeweiligen Teilgetriebewellen 4 und 5, die Reibkupplung 6, die Motorausgangswelle 7, die Getriebeausgangswelle 8, die erste Getriebeeingangswelle 9 und die zweite Getriebeeingangswelle 10 auf. Im Gegensatz zu der Ausführungsform gemäß den Figuren 1 bis 13 weisen die beiden Teilgetriebe 2 und 3 jedoch nicht sämtliche Gangstufen auf. Da die Gangstufen allesamt nur einmal vorhanden sind, wurden diese in der Ausführungsform der Figuren 14 bis 25 mit den Bezugszeichen 11 bis 18 bezeichnet. Im vorliegenden Fall sind die zweite Gangstufe 12, die vierte Gangstufe 14, die sechste Gangstufe 16 und die Gangstufe 18 für den Rückwärtsgang in dem ersten Teilgetriebe 2 vorhanden, wohingegen die erste Gangstufe 11, die dritte Gangstufe 13, die fünfte Gangstufe 15 und die siebte Gangstufe 17 in dem zweiten Teilgetriebe 3 angeordnet sind. Aus Gründen des Schaltablaufs hat sich diese Zuordnung der Gangstufen 11 bis 18 zu den beiden Teilgetrieben 2 und 3 als sinnvoll herausgestellt, es ist jedoch selbstverständlich auch möglich, die Gangstufen 11 bis 18 den beiden Teilgetrieben 2 und 3 auf eine andere Art und Weise zuzuordnen.

Um auch bei dieser Ausführungsform jeweils ein Teilgetriebe 2 oder 3 über die Reibkupplung 6 und das andere Teilgetriebe 3 oder 2 direkt über die Motorausgangswelle 7 anzutreiben, ist die zweite Getriebeeingangswelle 10 über erste Übertragungsmittel 25 und ein damit in Wirkverbindung stehendes Schaltelement 26 mit der ersten Teilgetriebewelle 4 und über weitere Übertragungsmittel 27 und ein damit in Wirkverbindung stehendes Schaltelement 28 mit der zweiten Teilgetriebewelle 5 in Wirkverbindung bringbar. In ähnlicher Weise ist auch die erste, mit der Reibkupplung 6 verbundene Getriebeeingangswelle 9 über erste Übertragungsmittel 29 und ein damit in Wirkverbindung stehendes Schaltelement 30 mit der ersten Teilgetriebewelle 4 und über weitere Übertragungsmittel 31 und ein demselben zugeordnetes Schaltelement 32 mit der zweiten Teilgetriebewelle 5 in Wirkverbindung bringbar. Auch hier sind die mit den Übertragungsmitteln 25 und 27 in Wirkverbindung stehenden Schaltelemente 26 und 28 als formschlüssige, kraftbetätigte Schaltelemente ausgebildet, die bei Wegfall der auf sie wirkenden Betätigungskraft deaktiviert werden. Wie bereits oben erwähnt, kann es sich bei diesen formschlüssigen Schaltelementen 26 und 28 um Klauenkupplungen handeln, was, wie oben erwähnt, unter Bezugnahme auf Fig. 25 näher beschrieben wird. Die Übertragungsmittel 25, 27, 29 und 31 sind im vorliegenden Fall als Zahnradpaare ausgebildet, wobei eines der Zahnräder auf der ersten Getriebeeingangswelle 9 oder der zweiten Getriebeeingangswelle 10 und das andere Zahnrad auf der ersten Teilgetriebewelle 4 oder der zweiten Teilgetriebewelle 5 angeordnet ist.

Bei dem in den Figuren 14 bis 24 dargestellten Getriebe 1 ist es möglich, die Motorausgangswelle 8 über die Reibkupplung 6 und eine der beiden Getriebeeingangswellen 9 bzw. 10 alternativ mit einem der beiden Teilgetriebe 2 oder 3 und das andere Teilgetriebe 3 bzw. 2 über die andere der beiden Getriebeeingangswellen 10 bzw. 9 direkt mit der Motorausgangswelle 7 zu verbinden.

Ähnlich wie unter Bezugnahme auf die Figuren 1 bis 13 beschrieben, sind auch die Gangstufen 11 bis 18 mit jeweiligen Schaltelementen versehen, die in der Lage sind, die einzelnen Gangstufen 11 bis 18 einzulegen bzw. auszurücken. Im vorliegenden Fall ist der ersten Gangstufe 11 und der dritten Gangstufe 13 ein gemeinsames Schaltelement 33, der Gangstufe 18 für den Rückwärtsgang und der zweiten Gangstufe 12 ein gemeinsames Schaltelement 34, der vierten Gangstufe 14 und der sechsten Gangstufe 16 ein gemeinsames Schaltelement 35 und der fünften Gangstufe 15 und der siebten Gangstufe 17 ein gemeinsames Schaltelement 36 zugeordnet. Die genannten Schaltelemente 33 bis 36 können in an sich bekannter Weise ausgeführt sein und dienen wie erwähnt dazu, die jeweilige Gangstufe 11 bis 18 einzulegen oder zu lösen. Im Gegensatz zu dem unter Bezugnahme auf die Figuren 1 bis 13 beschriebenen Getriebe 1, bei dem die Schaltelemente 19b bis 22b als formschlüssige Schaltelemente ausgebildet sind, sind die Schaltelemente 33 bis 36 des unter Bezugnahme auf die Figuren 14 bis 24 beschriebenen Getriebes 1 in üblicher Weise ausgebildet und mit Synchronisierungen und dergleichen versehen. Im Gegensatz zu den auf die mit der zweiten Getriebeausgangswelle 10 verbundenen Übertragungsmittel 25 und 27 wirkenden Schaltelemente 26 und 28 sind auch die beiden auf die mit der ersten Getriebeeingangswelle 9 verbundenen Übertragungsmittel 29 und 31 wirkenden Schaltelemente 30 und 32 mit Synchronisierungen versehen.

Anhand der Figuren 14 bis 25 werden nun, ähnlich wie unter Bezugnahme auf die Figuren 1 bis 13, beispielhaft Schaltvorgänge bei dem die beiden Teilgetriebe 2 und 3 aufweisenden Getriebe 1 dieser Ausführungsform erläutert.

Fig. 14 zeigt den Ruhezustand des Getriebes 1, bei dem in keinem der beiden Teilgetriebe 2 und 3 eine Gangstufe eingelegt ist.

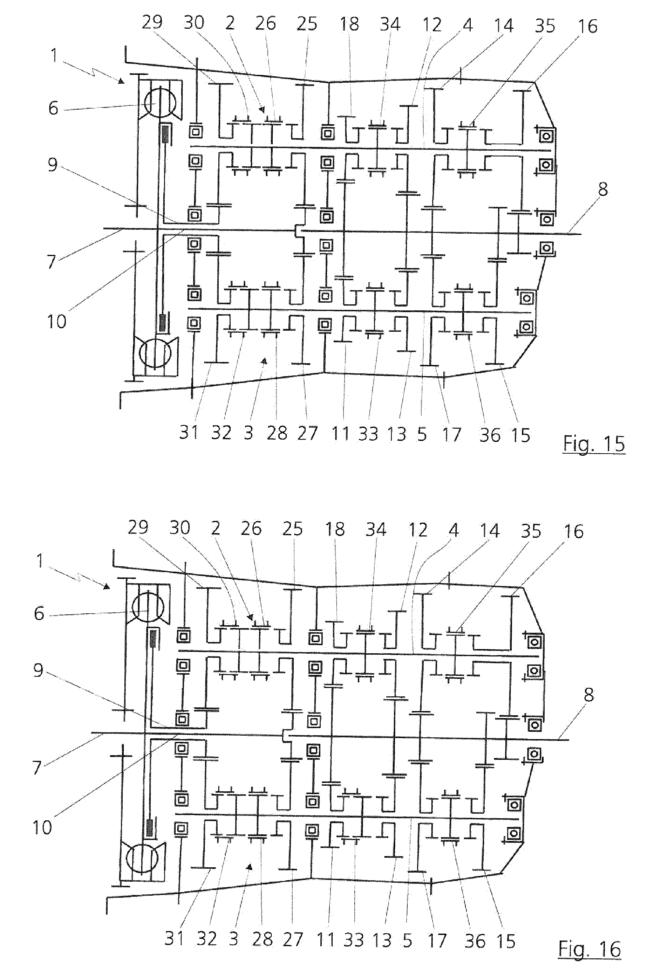

In dem Schaltzustand von Fig. 15 wurden die beiden Schaltelemente 30 und 32 der beiden Übertragungsmittel 29 und 31 betätigt, so dass die von der Reibkupplung 6 ausgehende erste Getriebeeingangswelle 9 mit den beiden Teilgetriebewellen 4 und 5 verbunden ist. Die Reibkupplung 6 kann sich dabei in der geöffneten oder der geschlossenen Position befinden, da in keinem der beiden Teilgetriebe 2 oder 3 eine Gangstufe eingelegt ist. Dieser Zustand kann als Grundstellung bezeichnet werden.

In dem Schaltzustand von Fig. 16 wurde mittels des der ersten Gangstufe 11 zugeordneten Schaltelements 33 in dem zweiten Teilgetriebe 3 die erste Gangstufe 11 eingelegt. Da die Reibkupplung 6 auch weiterhin geöffnet ist, wird die Getriebeausgangswelle 8 dennoch nicht von der Motorausgangswelle 7 angetrieben.

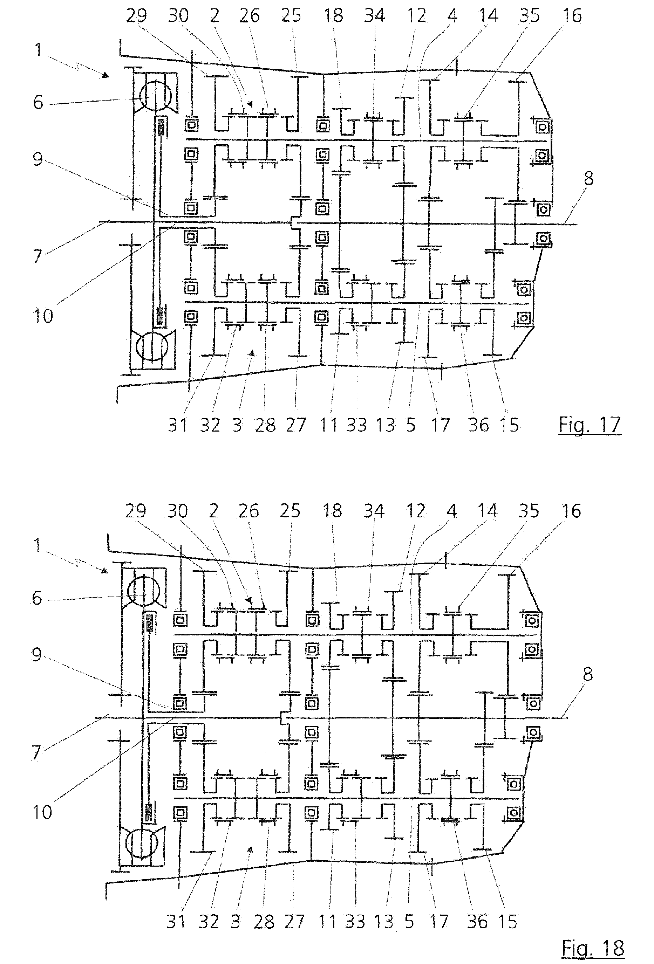

Das Schließen der Reibkupplung findet gemäß Fig. 17 statt, wodurch sich ein Antrieb der Getriebeausgangswelle 8 über die Reibkupplung 6, die erste Getriebeeingangswelle 9, die Übertragungsmittel 31, die zweite Teilgetriebewelle 5 und die erste Gangstufe 11 ergibt. In diesem Fall wird also das Kraftfahrzeug angetrieben und bewegt sich in der ersten Gangstufe 11.

In dem Schaltzustand von Fig. 18 wurde das dem Übertragungsmittel 27 zugeordnete Schaltelement 28 betätigt, um das Übertragungsmittel 27 in Eingriff zu bringen und damit die zweite Teilgetriebewelle 5 neben dem bereits vorhandenen Antrieb über die Reibkupplung 6 und die erste Getriebeeingangswelle 9 zusätzlich auch über die direkt mit der Motorausgangswelle 7 verbundene zweite Getriebeeingangswelle 10 anzutreiben. Neben dem oben beschriebenen Antrieb der zweiten Teilgetriebewelle 5 über die Reibkupplung 6, die erste Getriebeeingangswelle 9, das Zahnradpaar 37 und das Übertragungsmittel 31 findet in diesem Fall der Antrieb der Getriebeausgangswelle 7 also auch über die direkt mit der Motorausgangswelle 7 verbundene zweite Getriebeeingangswelle 10 und das Übertragungsmittel 27 statt.

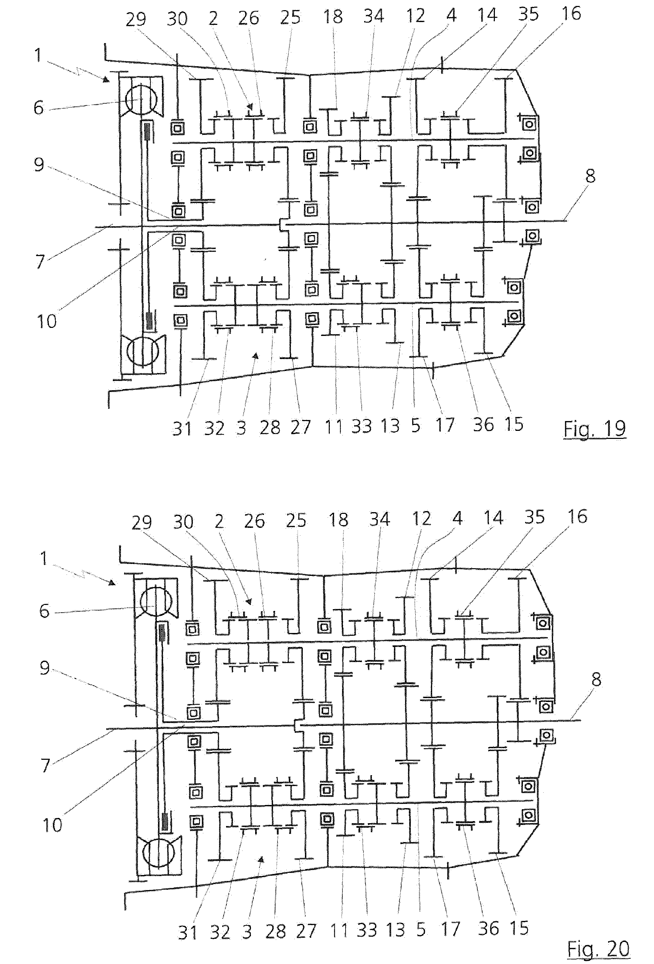

Bei dem Schaltzustand von Fig. 19 wurde die Reibkupplung 6 geöffnet und der Antrieb der Getriebeausgangswelle 8 erfolgt ausschließlich über die zweite Getriebeeingangswelle 10, das Übertragungsmittel 27, die zweite Teilgetriebewelle 5 und die erste Gangstufe 11 auf die Motorausgangswelle 7. Analog zu dem oben beschriebenen Schaltzustand von Fig. 5 handelt es sich demnach um einen Direktantrieb der Getriebeausgangswelle 8 ohne die Verwendung der Reibkupplung 6.

Im Schaltzustand von Fig. 20 wurde das Schaltelement 32 geöffnet bzw. in seine neutrale Position gebracht, sodass die erste Getriebeeingangswelle 9 auch im geschlossenen Zustand der Reibkupplung 6 nicht mehr mit der zweiten Teilgetriebewelle 5 verbunden wäre.

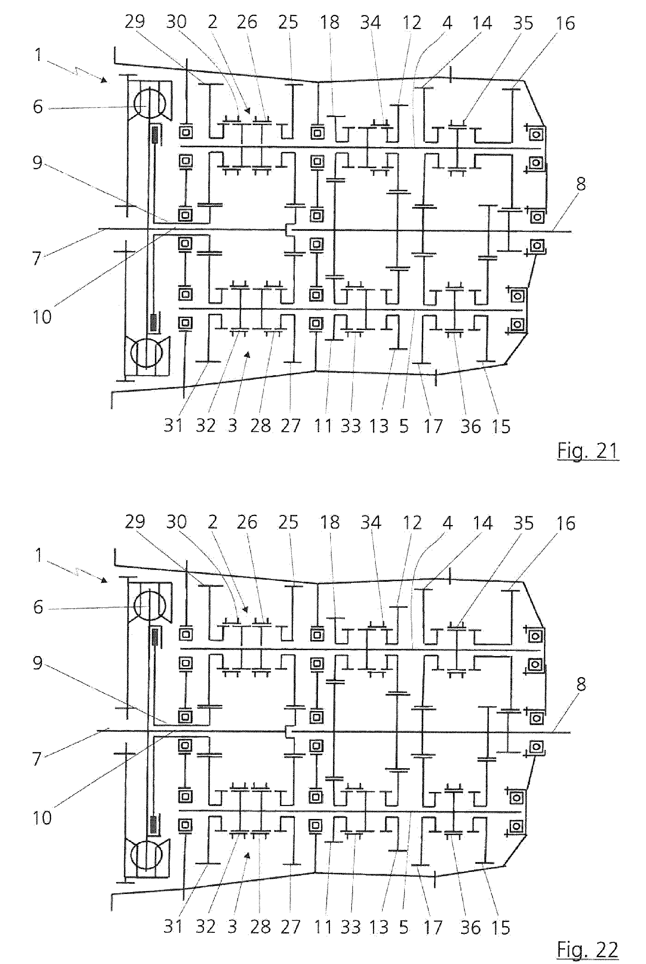

Fig. 21 zeigt einen Schaltzustand, bei dem in dem ersten Teilgetriebe 2 mittels des Schaltelements 34 die zweite Gangstufe 12 eingelegt wurde. Da die Reibkupplung 6 weiterhin geöffnet ist, erfolgt jedoch keine Verbindung dieser zweiten Gangstufe 12 mit der Getriebeausgangswelle 8. Vielmehr dient dies als Vorbereitung, um in einem nachfolgenden Schritt das Getriebe 1 in die zweite Gangstufe 12 zu schalten.

Dieser nachfolgende Schritt ist in Fig. 22 dargestellt, bei welchem im Prinzip analog zu der Vorgehensweise von Fig. 8 gleichzeitig die Reibkupplung geschlossen und das auf das Übertragungsmittel 27 wirkende Schaltelement 28 geöffnet wird, so dass die Verbindung zwischen der zweiten Getriebeeingangswelle 10, die ja die Reibkupplung 6 umgeht und direkt mit der Motorausgangswelle 7 verbunden ist, auf die zweite Teilgetriebewelle 5 unterbrochen wird. Dieses selbsttätige Lösen des Schaltelements 28 ist durch die wie oben erwähnt unter Bezugnahme auf Fig. 25 beschriebene Ausführungsform des formschlüssigen, kraftbetätigten Schaltelements 28 gewährleistet.

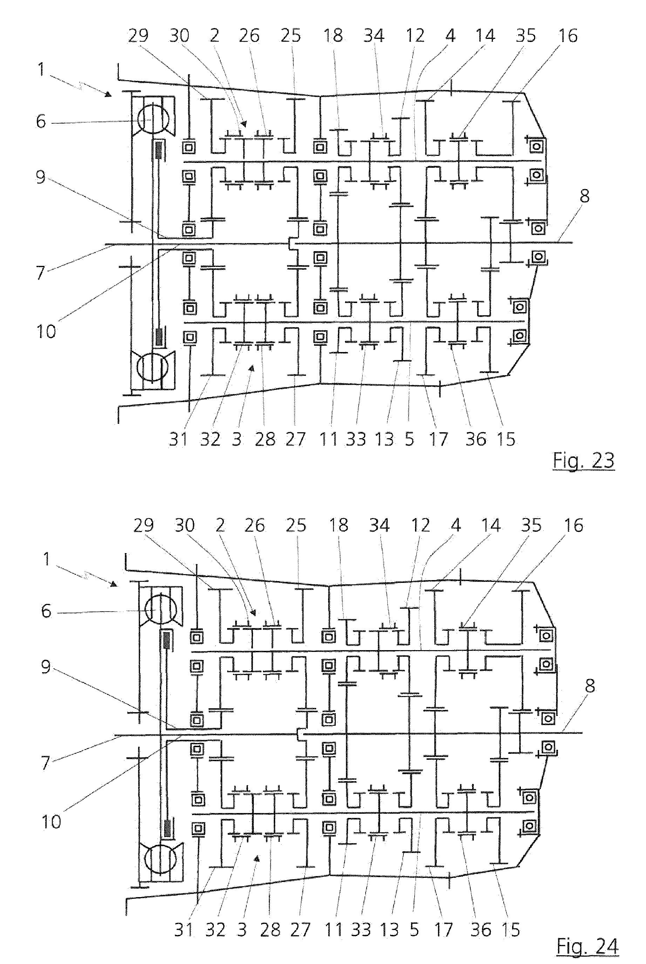

Im Schaltzustand von Fig. 23 wurde durch entsprechendes Betätigen des Schaltelements 33 die erste Gangstufe 11 in dem zweiten Teilgetriebe 3 außer Eingriff genommen, so dass der Antrieb der Getriebeausgangswelle 8 wie auch im Falle von Fig. 22 ausschließlich über die Reibkupplung 6, die erste Getriebeeingangswelle 9, das Übertragungsmittel 29, die erste Teilgetriebewelle 4 und die zweite Gangstufe 12 erfolgt.

Im Schaltzustand von Fig. 24 wurde das Übertragungsmittel 31 durch Betätigen desselben mit dem Schaltelement 32 in Eingriff gebracht. Auf diese Weise wird ein späteres Umschalten des Getriebes auf die dem zweiten Teilgetriebe 3 zugeordnete dritte Gangstufe 13 vorbereitet.

Die weiteren Schaltvorgänge, die mit der in den Figuren 14 bis 24 dargestellten Ausführungsform des Getriebes 1 durchgeführt werden können, ergeben sich analog zu den oben beschriebenen Schaltvorgängen beim Umschalten von der ersten Gangstufe 11 in die zweite Gangstufe 12, wobei das Herunterschalten in umgekehrter Reihenfolge durchgeführt wird.

In Fig. 25 ist beispielhaft eine Klauenkupplung dargestellt, die sowohl für die Schaltelemente 19b, 20b, 21b und 22b der unter Bezugnahme auf die Figuren 1 bis 13 beschriebenen ersten Ausführungsform des Getriebes 1 als auch für die Schaltelemente 26 und 28 des unter Bezugnahme auf die Figuren 14 bis 24 beschriebenen zweiten Ausführungsform des Getriebes 1 einsetzbar ist. Es ist erkennbar, dass es sich dabei um einen Teil einer Klauenkupplung mit zwei Kupplungshälften handelt, bei der ein Vorsprung 37 der einen Kupplungshälfte 38 in eine Ausnehmung 39 einer zweiten Kupplungshälfte 40 eingreift, wobei zwischen dem Vorsprung 37 und der Ausnehmung 39 ein Formschluss besteht. Der Vorsprung 37 und die Ausnehmung 39 weisen miteinander korrespondierende Schrägflächen auf, deren Winkel so ausgewählt ist, dass bei einem Wegfall der Betätigungskraft sich die beiden Kupplungshälften 38 und 40 voneinander lösen. Das selbsttätige Lösen der beiden Kupplungshälften 38 und 40 voneinander erfolgt durch die in Axialrichtung wirkende Komponente der auf die beiden Kupplungshälften 38 und 40 wirkenden Kraft, die sich aufgrund der Schrägflächen ergibt. Vorzugsweise wird die auf wenigstens eine der beiden Kupplungshälften 38 und 40 wirkende Kraft hydraulisch aufgebracht. Selbstverständlich kann statt eines entsprechenden Hydraulikzylinders auch ein Elektromotor verwendet werden, um die Schaltelemente elektrisch zu verstellen.

Statt der Klauenkupplung könnten auch geeignete Verzahnungen für die Schaltelemente 19b, 20b, 21b und 22b bzw. 26 und 28 eingesetzt werden. Des Weiteren ist es denkbar, die mit der Motorausgangswelle 7 in Verbindung stehenden Schaltelemente 19b, 20b, 21b und 22b bzw. 26 und 28 nicht als formschlüssige, kraftbetätigte Schaltelemente auszuführen, sondern eine Einrichtung zu verwenden, die die entsprechenden Schaltelemente in ihre die jeweilige Gangstufe nicht betätigende Stellung bringt.

In den Figuren 26 bis 29 sind verschiedene beispielhafte Drehmomentverläufe beim Hochschalten von einer Gangstufe 11 bis 16 in eine der Gangstufen 12 bis 17 eines der hierin beschriebenen Getriebe 1 dargestellt. Dabei ist jeweils das an der ersten Getriebeeingangswelle 9 bzw. an der zweiten Getriebeeingangswelle 10 anliegende Drehmoment in Prozent des maximalen Drehmoments über der Zeit in Millisekunden aufgetragen. Die mit "A" gekennzeichnete Kurve zeigt dabei jeweils den Drehmomentverlauf der direkt mit der Motorausgangswelle 7 verbundenen Getriebeeingangswelle 9 oder 10, wohingegen die mit "B" bezeichnete Kurve den Drehmomentverlauf an der mit der Reibkupplung 6 verbundenen Getriebeeingangswelle 9 oder 10 zeigt.

Bei dem Verlauf von Fig. 26 ist zu erkennen, dass das Drehmoment an der mit der Reibkupplung 6 verbundenen Getriebeeingangswelle 9 oder 10 erst dann aufgebaut wird, wenn an der direkt mit der Motorausgangswelle 7 verbundenen Getriebeeingangswelle 9 oder 10 kein Drehmoment mehr anliegt. Bei dieser hinsichtlich eventueller Probleme sehr vorsichtigen bzw. konservativen Vorgehensweise ergibt sich eine Umschaltzeit von ca. 50 ms.

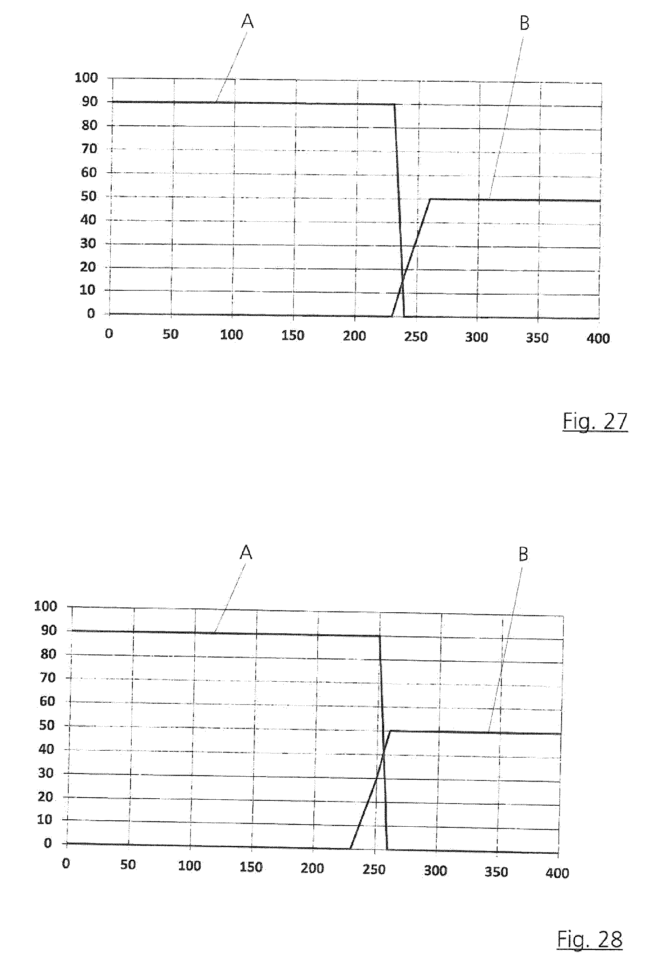

Bei der Vorgehensweise von Fig. 27 wird die Reibkupplung 6 bereits zu einem Zeitpunkt in Eingriff gebracht, an dem an der direkt mit der Motorausgangswelle 7 verbundenen Getriebeeingangswelle 9 oder 10 noch das volle Drehmoment anliegt. Das dem entsprechenden Gang zugeordnete Schaltelement 19b, 20b, 21 b, 22b bei der Ausführungsform der Figuren 1 bis 13 bzw. das direkt mit der Motorausgangswelle 7 verbundenen Getriebeeingangswelle 9 oder 10 zugeordnete Schaltelement 26 oder 28 bei der Ausführungsform der Figuren 14 bis 24 wird demnach erst deaktiviert, wenn die Reibkupplung 6 in Eingriff geht. Dabei handelt es sich um eine weniger konservative Umschaltstrategie, bei der die Schaltzeit ca. 35 ms beträgt.

Eine optimierte Schaltstrategie ist in Fig. 28 dargestellt. Dabei geht die Reibkupplung 6 bereits in Eingriff, bevor das Drehmoment an der direkt mit der Motorausgangswelle 7 verbundenen Getriebeeingangswelle 9 oder 10 reduziert wird. Daraus ergibt sich eine Schaltzeit von ca. 10 ms vom Beginn der Reduzierung des Drehmoments der direkt mit der Motorausgangswelle 7 verbundenen Getriebeeingangswelle 9 oder 10 bis zum Erreichen des gewünschten und aufgrund des Hochschaltens in eine höhere Gangstufe niedrigeren Drehmoments an der mit der Reibkupplung 6 verbundenen Getriebeeingangswelle 9 oder 10. Bei dieser kurzen Schaltzeit ist im Prinzip keine Zugkraftunterbrechung vorhanden.

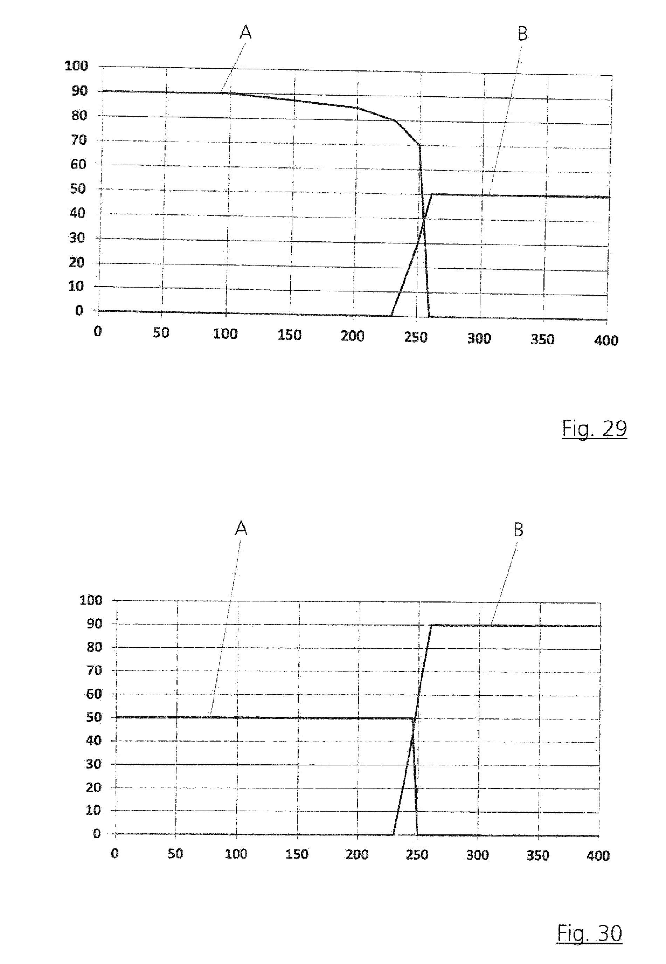

Wie aus der Schaltstrategie von Fig. 29 ersichtlich ist, kann, um eventuelle Probleme beim Hochschalten zu umgehen, das Drehmoment der direkt mit der Motorausgangswelle 7 verbundenen Getriebeeingangswelle 9 oder 10 bereits vor dem Schaltvorgang reduziert werden. Dies erfolgt durch eine Verringerung des Drehmoments des die Motorausgangswelle 7 aufweisenden Antriebsmotors, bei dem es sich beispielsweise um einen Verbrennungsmotor, jedoch auch um einen Elektromotor handeln kann.

Fig. 30 zeigt ein Diagramm, in dem ein beispielhafter Drehmomentverlauf beim Herunterschalten von einer der Gangstufen 12 bis 17 in eine der Gangstufen 11 bis 16 eines der hierin beschriebenen Getriebe 1 dargestellt ist. Diese Schaltstrategie entspricht im Prinzip der in Fig. 28 dargestellten Schaltstrategie beim Hochschalten, d. h. es wird eine sehr kurze Schaltzeit erreicht. Wiederum ist mit der Kurve "A" das Drehmoment an der direkt mit der Motorausgangswelle 7 verbundenen Getriebeeingangswelle 9 oder 10 und mit der Kurve "B" das Drehmoment an der mit der Reibkupplung 6 verbundenen Getriebeeingangswelle 9 oder 10 dargestellt. Selbstverständlich sind die oben unter Bezugnahme auf die Figuren 26, 27, 28 und 29 beschriebenen Schaltstrategien auch auf die Schaltstrategie beim Herunterschalten übertragbar.

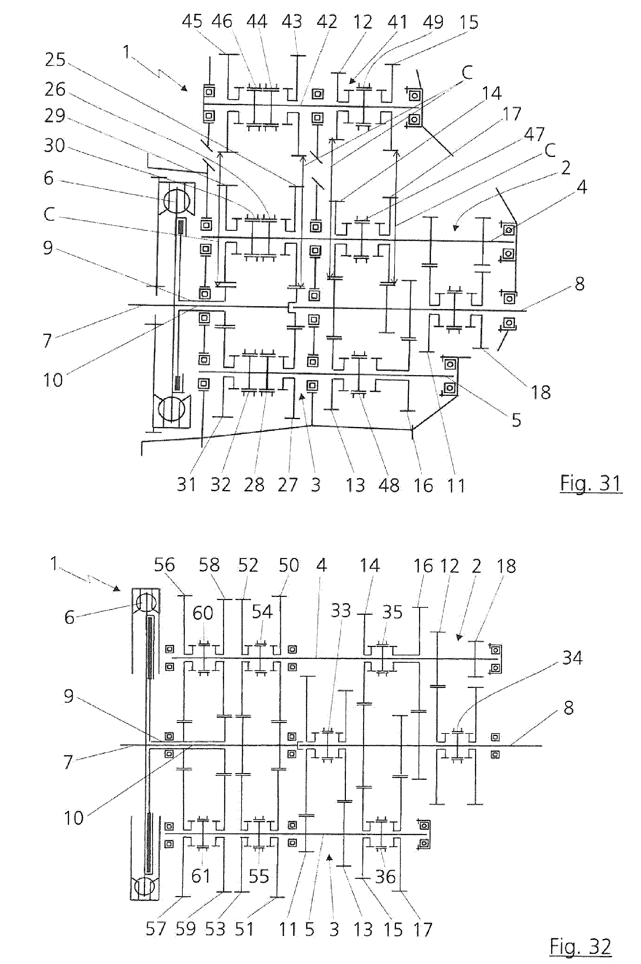

Bei der Ausführungsform des Getriebes 1 gemäß Fig. 31 ist zusätzlich zu den beiden Teilgetrieben 2 und 3 der in den Figuren 14 bis 24 dargestellten Ausführungsform ein drittes Teilgetriebe 41 vorhanden. Dabei sind wiederum die Gangstufen 11 bis 18 vorgesehen, wobei die erste Gangstufe 11 und die Gangstufe 18 für den Rückwärtsgang direkt auf der Motorausgangswelle 7 angeordnet sind. Die vierte Gangstufe 14 und die siebte Gangstufe 17 sind auf der ersten Teilgetriebewelle 4 des ersten Teilgetriebes 2 angeordnet, die dritte Gangstufe 13 und die sechste Gangstufe 16 sind auf der zweiten Teilgetriebewelle 5 des zweiten Teilgetriebes 3 angeordnet und die zweite Gangstufe 12 und die fünfte Gangstufe 15 sind auf einer dritten Teilgetriebewelle 42 des dritten Teilgetriebes 41 angeordnet.

Wie unter Bezugnahme auf die Figuren 14 bis 24 beschrieben, sind auch hier die Übertragungsmittel 25, 27, 29 und 31 mit den denselben zugeordneten Schaltelementen 26, 28, 30 und 32 vorgesehen. Zusätzlich sind für das dritte Teilgetriebe 41 ein mit der zweiten Getriebeeingangswelle 10 verbundenes bzw. zusammenarbeitendes Übertragungsmittel 43 mit einem demselben zugeordneten Schaltelement 44 und ein mit der ersten Getriebeeingangswelle 9 verbundenes Übertragungsmittel 45 mit einem demselben zugeordneten Schaltelement 46 vorgesehen. Bei dieser Ausführungsform ist die erste Getriebeeingangswelle 9 also über die Übertragungsmittel 29, 31 und 45 und die denselben zugeordneten Schaltelementen 30, 32 und 46 mit den drei Teilgetriebewellen 4, 5 und 41 in Wirkverbindung bringbar. Die zweite Getriebeeingangswelle 10 ist über die Übertragungsmittel 25, 27 und 43 und die denselben zugeordneten Schaltelementen 26, 29 und 44 mit den drei Teilgetriebewellen 4, 5 und 41 in Wirkverbindung bringbar.

Selbstverständlich ist das dritte Teilgetriebe 41 nicht in einer Ebene mit den beiden Teilgetrieben 2 und 3 angeordnet, wie dies in Fig. 31 dargestellt ist, sondern räumlich aus der Blattebene heraus versetzt. Dies ist durch die Pfeile "C" angedeutet. Im Prinzip sind die drei Teilgetriebe 2, 3 und 41 in der Art eines Dreiecks angeordnet.

Analog zu der Ausführungsform der Figuren 14 bis 24 ist auch hier jeder der Gangstufen 11 bis 17 ein entsprechendes Schaltelement zugeordnet. Zur Betätigung der beiden Gangstufen 14 und 17 des ersten Teilgetriebes 2 ist ein Schaltelement 47 vorgesehen, zur Betätigung der beiden Gangstufen 13 und 16 des zweiten Teilgetriebes 3 ist ein Schaltelement 48 vorgesehen und zur Betätigung der beiden Gangstufen 12 und 15 des dritten Teilgetriebes 41 ist ein weiteres Schaltelement 49 vorgesehen. Die Wirkungsweise der Schaltelemente 47, 48 und 49 entspricht derjenigen der Schaltelemente 33 bis 36 der in den Figuren 14 bis 24 dargestellten Ausführungsform des Getriebes 1.

Das in Fig. 31 dargestellte Getriebe 1 mit den drei Teilgetrieben 2, 3 und 41 kann im Prinzip analog zu dem in den Figuren 14 bis 24 dargestellten Getriebe 1 mit den beiden Teilgetrieben 2 und 3 betrieben werden. Allerdings ist bei jedem Schaltvorgang eine größere Auswahl an Gangwechseln möglich, da von jedem der Teilgetriebe 2, 3 und 41 in jedes andere Teilgetriebe 2, 3 und 41 umgeschaltet werden kann, d. h. es stehen stets zwei Teilgetriebe zur Verfügung, in welche ein Gangwechsel stattfinden kann. Dadurch ist eine größere Flexibilität beim Gangwechsel möglich. Zusätzlich zu dem dritten Teilgetriebe 41 ist vorstellbar, noch weitere Teilgetriebe vorzusehen.

In Fig. 32 ist eine weitere Ausführungsform des Getriebes 1 dargestellt. Dabei handelt es sich um eine abgewandelte Form der in den Figuren 14 bis 24 dargestellte Ausführungsform des Getriebes 1, bei der jedoch die beiden Getriebeeingangswellen 9 und 10 jeweils mit zwei zusätzlichen Übertragungsmitteln, die unterschiedliche Übersetzungen aufweisen, verbunden sind. Im Prinzip werden dabei die bei der Ausführungsform der Figuren 14 bis 24 vorhandenen Übertragungsmittel 25, 27, 29 und 31 durch jeweils zwei Übertragungsmittel ersetzt.

Im Einzelnen sind der zweiten Getriebeeingangswelle 10 jeweils zwei Übertragungsmittel 50 und 51, die eine niedrige Übersetzung aufweisen, und zwei Übertragungsmittel 52 und 53 zugeordnet, die eine höhere Übersetzung aufweisen. Die Übertragungsmittel 50 und 52 können mittels eines zwischen denselben angeordneten Schaltelements 54 umgeschaltet werden. Analog dazu können die Übertragungsmittel 51 und 53 mittels eines zwischen denselben angeordneten Schaltelements 55 umgeschaltet werden. Während die beiden Übertragungsmittel 50 und 52 der ersten Teilgetriebewelle 4 des ersten Teilgetriebes 2 zugeordnet sind, sind die beiden Übertragungsmittel 51 und 53 der zweiten Teilgetriebewelle 5 des zweiten Teilgetriebes 3 zugeordnet. Des Weiteren sind der ersten Getriebeeingangswelle 9 jeweilige Übertragungsmittel 56 und 57 mit einer niedrigen Übersetzung und jeweilige Übertragungsmittel 58 und 59 mit einer höheren Übersetzung zugeordnet. Ebenso wie die Übertragungsmittel 50, 51, 52 und 53 kann zwischen den beiden Übertragungsmitteln 56 und 58 mittels eines Schaltelements 60 und zwischen den beiden Übertragungsmitteln 57 und 59 mittels eines Schaltelements 61 umgeschaltet werden, um von der niedrigeren in die höhere Übersetzung umzuschalten und umgekehrt.

Durch diese Ausführung des Getriebes 1 gemäß Fig. 32 kann die Anzahl der zu schaltenden Gangstufen verdoppelt werden. Dabei ist es möglich, die einzelnen Gangstufen 11 bis 18 mit den zusätzlichen Übertragungsmitteln 50 bis 53 und 56 bis 59 in der Art eines Range-Getriebes oder in der Art eines Split-Getriebes zu kombinieren. Selbstverständlich ist diese Ausführungsform, bei dem die Übertragungsmittel 50 bis 53 und 56 bis 59 mit den jeweils unterschiedlichen Übersetzungen vorhanden sind, auch mit dem unter Bezugnahme auf die Figuren 1 bis 13 beschriebenen Getriebe 1 einsetzbar.

## Patentansprüche

1. Getriebe (1) mit wenigstens zwei Teilgetrieben (2,3), die jeweilige Teilgetriebewellen (4,5) aufweisen und unabhängig voneinander schaltbar sind, mit einer Reibkupplung (6), mit einer mit der Reibkupplung (6) verbundenen Motorausgangswelle (7), mit einer von der Reibkupplung (6) ausgehenden ersten Getriebeeingangswelle (9), und mit einer die Reibkupplung (6) umgehenden, mit der Motorausgangswelle (7) direkt verbundenen zweiten Getriebeeingangswelle (10), wobei die Teilgetriebewelle (4) des ersten Teilgetriebes (2) mit der ersten Getriebeeingangswelle (9) und/oder der zweiten Getriebeeingangswelle (10) in Wirkverbindung bringbar ist, und wobei die Teilgetriebewelle (5) des zweiten Teilgetriebes (3) mit der zweiten Getriebeeingangswelle (10) und/oder der ersten Getriebeeingangswelle (9) in Wirkverbindung bringbar ist.

2. Getriebe nach Anspruch 1,
**dadurch gekennzeichnet, dass**
die einzelnen Gangstufen (11b-18b) zumindest des zweiten Teilgetriebes (3) mittels jeweiliger Schaltelemente (19b-22b) betätigbar sind.

3. Getriebe nach Anspruch 2,
**dadurch gekennzeichnet, dass**
die direkt mit der Motorausgangswelle (7) in Verbindung stehenden Schaltelemente (19b-22b) als formschlüssige, kraftbetätigte Schaltelemente (19b-22b) ausgebildet sind, die bei Wegfall der Betätigungskraft deaktiviert werden.

4. Getriebe nach Anspruch 1,
**dadurch gekennzeichnet, dass**
die zweite Getriebeeingangswelle (10) über jeweilige Übertragungsmittel (25,27) und damit in Wirkverbindung stehende Schaltelemente (26,28) mit den wenigstens zwei Teilgetriebewellen (4,5) in Wirkverbindung bringbar ist.

5. Getriebe nach Anspruch 4,
**dadurch gekennzeichnet, dass**
die mit den Übertragungsmitteln (25,27) in Wirkverbindung stehenden Schaltelemente (26,28) als formschlüssige, kraftbetätigte Schaltelemente (26,28) ausgebildet sind, die bei Wegfall der Betätigungskraft deaktiviert werden.

6. Getriebe nach Anspruch 3 oder 5,
**dadurch gekennzeichnet, dass**
die formschlüssigen Schaltelemente (19b-22b,26,28) als Klauenkupplungen ausgebildet sind.

7. Getriebe nach Anspruch 4, 5 oder 6,
**dadurch gekennzeichnet, dass**
die Übertragungsmittel (25,27) als Zahnradpaare ausgebildet sind.

8. Getriebe nach einem der Ansprüche 1 bis 7,
**dadurch gekennzeichnet, dass**
die erste Getriebeeingangswelle (9) und die zweite Getriebeeingangswelle (10) koaxial ineinander angeordnet sind.

9. Getriebe nach einem der Ansprüche 1 bis 8,
**dadurch gekennzeichnet, dass**
drei oder mehr Teilgetriebe (2,3,41) mit jeweiligen Teilgetriebewellen (4,5,42) vorgesehen sind, wobei die zweite Getriebeeingangswelle (10) über jeweilige Übertragungsmittel (25,27,43) und damit in Wirkverbindung stehende Schaltelemente (26,28,44) mit den drei oder mehr Teilgetriebewellen (4,5,42) in Wirkverbindung bringbar ist.

10. Getriebe nach einem der Ansprüche 1 bis 9,
**dadurch gekennzeichnet, dass**
die beiden Getriebeeingangswellen (9,10) jeweils mit wenigstens zwei Übertragungsmitteln (50-53,56-59), die unterschiedliche Übersetzungen aufweisen, verbunden sind.

11. Verfahren zum Betreiben eines Getriebes (1) nach einem der Ansprüche 1 bis 10, wobei in einem Zustand, in dem in dem mit der Reibkupplung (6) verbundenen Teilgetriebe (2,3) eine Gangstufe (11-17,11a-17a,11b-17b) eingelegt wird und die Reibkupplung (6) geöffnet ist, die Getriebeausgangswelle (8) direkt durch die die Reibkupplung (6) umgehende, direkt mit der Motorausgangswelle (7) verbundene Getriebeeingangswelle (9,10) angetrieben wird, und wobei beim Schließen der Reibkupplung (6) die in dem direkt mit der Motorausgangswelle (7) verbundenen Teilgetriebe (2,3) eingelegte Gangstufe (11-17,11a-17a,11b-17b) herausgenommen wird.

12. Verfahren nach Anspruch 11,
**dadurch gekennzeichnet, dass**
unmittelbar nach einem Schaltvorgang und dem Einlegen einer Gangstufe (11-17,11a-17a,11b17b) in dem direkt mit der Motorausgangswelle (7) verbundenen Teilgetriebe (2,3) die Reibkupplung (6) geöffnet und die Getriebeausgangswelle (8) ausschließlich über die direkt mit der Motorausgangswelle (7) verbundene Getriebeeingangswelle (9,10) angetrieben wird.

13. Verfahren nach Anspruch 11,
**dadurch gekennzeichnet, dass**
in dem direkt mit der Motorausgangswelle (7) verbundenen Teilgetriebe (2,3) nur unmittelbar vor einem Schaltvorgang eine Gangstufe (11-17,11a-17a,11b-17b) eingelegt wird, und dass unmittelbar nach einem Schaltvorgang in dem direkt mit der Motorausgangswelle (7) verbundenen Teilgetriebe (2,3) die Gangstufe (11-17,11a-17a,11b-17b) herausgenommen wird.
